# EUROPÄISCHE PATENTANMELDUNG

(11) **EP 2 299 248 A1**
(43) Veröffentlichungstag der Anmeldung: **23.03.2011**
(21) Anmeldenummer: 09011731.8
(22) Anmeldetag: 14.09.2009
(51) Int. Cl.: G01H 1/00

(54) **Verfahren zur Ermittlung von Rissen in Turbinenschaufeln**

(71) Anmelder: SIEMENS AKTIENGESELLSCHAFT, 80333 München (DE)
(72) Erfinder: Jung, Michael, 45133 Essen (DE); Linnemann, Uwe, 41515 Grevenbroich (DE); Richter, Christoph Hermann, Dr., 49477 Ibbenbüren (DE); Schindler, Peter, 45481 Mülheim (DE); Steckel, Lando, 45359 Essen (DE)

(57) **Zusammenfassung**

Die Erfindung betrifft ein Verfahren zur Ermittlung von Rissen in Turbinenschaufeln (3), wobei die Ermittlung während des Betriebes erfolgt, wobei zunächst über Finite-Elemente-Berechnungen Schaufeleigenfrequenzen theoretisch ermittelt werden und anschließend mit gemessenen Schaufeleigenfrequenzen verglichen und eine Fehlermeldung generiert wird, sobald eine Abweichung über einem definierten Grenzwert beobachtet wird.

## Beschreibung

Die Erfindung betrifft ein Verfahren zur Ermittlung von Rissen in Turbinenschaufeln, wobei Schaufelschwingungen der Turbinenschaufel während eines Betriebes ermittelt werden und ein Riss während des Betriebes ermittelbar ist.

Turbomaschinen, insbesondere Dampfturbinen, werden im Betrieb hohen mechanischen und thermischen Belastungen ausgesetzt. Strömungsmaschinen umfassen im Wesentlichen ein feststehendes Bauteil sowie ein um eine Rotationsachse drehbar gelagertes Bauteil. An diesem drehbar gelagerten Bauteil sind in der Regel Turbinenschaufeln angeordnet, die die thermische Energie des Dampfes in Rotationsenergie umwandeln. Bei den im Betrieb auftretenden hohen thermischen Belastungen und den mechanischen Kräften ist es möglich, dass die Turbinenschaufeln Schaufelschwingungen durchführen. Darüber hinaus ist es möglich, dass Risse in den Turbinenschaufeln entstehen können. Eine Detektion solcher Risse ist in der Regel sehr schwierig. Derzeit werden Turbinenschaufeln im Stillstand während einer Revision oder Reparaturarbeiten auf Risse untersucht. Solch eine Untersuchungsmethode ist zeitaufwändig und erfolgt nicht während des Betriebes. Wünschenswert wäre es eine Methode zu haben, mit der es möglich ist, Risse in einer Turbinenschaufel während des Betriebes zu ermitteln.

Die Aufgabe der Erfindung ist es, ein Verfahren anzugeben, mit dem es möglich ist, Risse in einer Turbinenschaufel während des Betriebes zu ermitteln.

Diese Aufgabe wird gelöst durch ein Verfahren zur Ermittlung von Rissen in Turbinenschaufeln, wobei Schaufelschwingungen der Turbinenschaufel während eines Betriebes ermittelt werden, wobei die Schaufeleigenfrequenzen ermittelt werden, wobei theoretische Schaufeleigenfrequenzen berechnet werden und die gemessenen Schaufeleigenfrequenzen mit den theoretischen Schaufeleigenfrequenzen verglichen werden, wobei eine Ermittlung einer Abweichung zwischen der gemessenen Schaufeleigenfrequenz und der theoretischen Schaufeleigenfrequenz erfolgt, wobei ein Generieren einer Fehlermeldung erfolgt, sobald die Abweichung über einem definierten Grenzwert liegt.

Die Erfindung geht somit den neuen Weg, Risse in Turbinenschaufeln während des Betriebes zu ermitteln. Dies erfolgt in erster Linie dadurch, dass zunächst Schaufeleigenfrequenzen gemäß theoretischen Modellen berechnet werden und diese mit gemessenen Schaufeleigenfrequenzen verglichen werden. Diese theoretischen Schaufeleigenfrequenzen hängen u. a. von verschiedenen Betriebsparametern wie Temperatur und Rotationsfrequenz ab. Sobald die gemessenen Schaufeleigenfrequenzen eine Abweichung gegenüber den theoretisch berechneten Schaufeleigenfrequenzen aufweisen, wird eine Fehlermeldung generiert, sobald diese Abweichung über einem definierten Grenzwert liegt.

Vorteilhafte Weiterentwicklungen sind in den Unteransprüchen angegeben. So wird in einer ersten vorteilhaften Weiterbildung die Schaufelschwingung berührungslos gemessen. Dies bietet den Vorteil, dass die Messmethode in erster Näherung keinen Einfluss auf die Schaufelschwingung der Turbinenschaufeln ausübt und darüber hinaus eine hinreichend genaue Frequenzmessung ermöglicht. Mit der berührungslosen Messung werden sowohl die Schaufelschwingungen ermittelt sowie die Rotationsfrequenz des Rotors.

In vorteilhaften Weiterentwicklungen werden die theoretischen Schaufeleigenfrequenzen mittels Finite-Elemente-Berechnungen ermittelt. Mittels der Finite-Berechnungen ist eine vergleichsweise genaue Methode angegeben, die Eigenfrequenzen von Turbinenschaufeln zu ermitteln. In erster Näherung sind die Schaufeleigenfrequenzen für alle auf einem Rotor in einem Kranz angeordneten Turbinenschaufeln identisch. In vorteilhaften Weiterentwicklungen werden die Schaufeleigenfrequenzen individuell pro Turbinenschaufel ermittelt, wobei die Lage dieser Turbinenschaufel im Rotorkranz zwingend ermittelt werden muss.

In einer vorteilhaften Weiterbildung werden die gemessenen Schaufelfrequenzen über Fast-Fourie-Transformation ermittelt. Zunächst werden die Schaufelschwingungen berührungslos gemessen. Diese als Zeitschriebe vorliegenden Datensätze werden anschließend mittels einer Fast-Fourie-Transformation in ein Frequenzsignal transformiert. Die Fast-Fourie-Transformation ist hierbei eine geeignete Methode, das Zeitsignal in ein Frequenzsignal zu ändern, da dies vergleichsweise schnell erfolgt.

In einer vorteilhaften Weiterbildung werden die Schaufeleigenfrequenzen in Abhängigkeit eines Risses und in Abhängigkeit von Drehzahl- und Temperaturabweichungen ermittelt, wodurch eine Vielzahl von Datensätzen entsteht. Mit dem theoretischen Berechnungsmodell wird zunächst ein Riss in der Turbinenschaufel angenommen und darauf hin die Eigenfrequenzen in Abhängigkeit der Drehzahl des Rotors und in Abhängigkeit der Temperatur berechnet. Wird nun im realen Betrieb ein Riss in erster Näherung detektiert kann durch veränderte Bedingungen, wie z. B. eine geänderte Drehzahl oder eine geänderte Temperatur der Riss eindeutig identifiziert werden. Darüber hinaus kann die Rissfortpflanzung fortwährend beobachtet werden, da ein größer werdender Riss sich in einem veränderten Frequenzverhalten in Abhängigkeit der Drehzahl- und Temperaturbedingungen niederschlägt. Die somit gewonnenen Datensätze werden abgespeichert und mit den real gemessenen Schaufeleigenfrequenzen verglichen. Sobald Abweichungen entstehen und diese über einem Grenzwert liegen wird dies als Störung in Form eines Risses detektiert. Sobald die Abweichung über einem definierten Grenzwert liegt, wird ein Störsignal ausgesendet.

In einer vorteilhaften Weiterentwicklung werden die gemessenen Schaufelfrequenzen in definierten zeitlichen Abständen beobachtet und aus der zeitlichen Entwicklung der gemessenen Schaufelfrequenzen ein Riss ggf. ermittelt. Hier liegt der Gedanke zugrunde, dass sobald ein Riss ermittelt ist, dieser in zeitlichen Abständen beobachtet wird und ggf. ein Risswachstum ermittelt wird. Dazu werden die gemessenen Eigenfrequenzen mit den theoretisch ermittelten Eigenfrequenzen verglichen, wobei hierbei in dem Modell für die theoretisch berechneten Eigenfrequenzen ein Riss angenommen wird, der zu unterschiedlichen Eigenfrequenzen führt.

Die Erfindung wird anhand eines Ausführungsbeispiels näher erläutert.

Es zeigt:

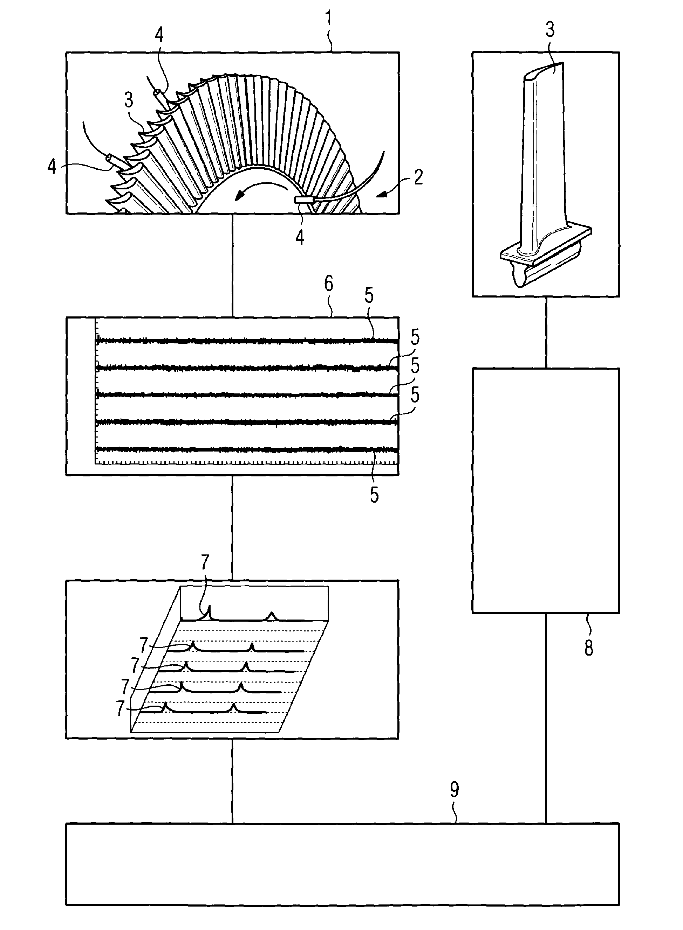

- Figur 1: eine schematische Darstellung des Verfahrens.

Im Teilbild 1 ist ein Rotorkranz 2 mit mehreren Turbinenschaufeln 3 zu sehen, wobei lediglich eine Turbinenschaufel mit dem Bezugszeichen 3 aus Gründen der Übersichtlichkeit versehen wurde. Im Betrieb erfahren diese Turbinenschaufeln unerwünschte Schwingungen, die schlimmstenfalls zu einem riss in der Turbinenschaufel 3 führen könnten. Diese Schwingungen werden mit Hilfe von berührungslosen Sensoren 4 ermittelt. Ein berührungsloser Sensor 4 ist hierbei an der Welle angeordnet. Die Positionen der berührungslosen Sensoren sind fest angeordnet.

Die über die berührungslosen Sensoren 4 ermittelten Zeitsignale 5 werden in einem Zeitschrieb 6 zwischengespeichert. In einem nächsten Verfahrensschritt werden diese Zeitsignale 5 in Frequenzsignale 7 umgewandelt. Dies erfolgt über eine Fourier-Transformation oder ähnliche Spektralanalyse.

Über Finite-Elemente-Berechnung werden die Schaufeleigenfrequenzen einer Turbinenschaufel 3 berechnet. Hierbei werden die Schaufeleigenfrequenzen unter Berücksichtigung von Risseinflüssen und von Störeinflüssen wie Drehzahl- und Temperaturabweichungen berechnet. Die somit gewonnenen Datensätze werden gespeichert und in einem nächsten Verfahrensschritt in einem Modul 9 ausgewertet. Dabei werden die gemessenen Schaufelfrequenzen mit den theoretisch berechneten Schaufelfrequenzen verglichen und, sofern eine Abweichung ermittelt ist, eine Fehlermeldung generiert, sobald die Abweichung über einem definierten Grenzwert liegt.

Bei der Analyse im Modul 9 werden im Wesentlichen die Unterschiede einer aktuellen n-ter Eigenfrequenz zu einer n-ter Eigenfrequenz zum Referenzzeitpunkt für untere k Eigenfrequenzen ermittelt. In einer alternativen Auswertemethode können die Unterschiede der Differenz zwischen einer n-ter Eigenfrequenz und m-ter Eigenfrequenz zu einem aktuellen und zum Referenzzeitpunkt in Betracht gezogen werden. In erster Näherung erfolgt ein Frequenzdrift bei einem Riss, der in einfacher Weise erkannt und analysiert werden kann.

## Patentansprüche

1. Verfahren zur Ermittelung von Rissen in Turbinenschaufeln (3),
wobei Schaufelschwingungen der Turbinenschaufel (3) während eines Betriebes ermittelt werden, mit den Schritten:
- Ermitteln der gemessenen Schaufeleigenfrequenz,
- Berechnung von theoretischen Schaufeleigenfrequenzen,
- Vergleichen der gemessenen Schaufeleigenfrequenzen mit den theoretischen Schaufeleigenfrequenzen,
- Ermittlung einer Abweichung zwischen der gemessenen Schaufeleigenfrequenz und der theoretischen Schaufeleigenfrequenz,
- Generieren einer Fehlermeldung, sobald die Abweichung über einem definierten Grenzwert liegt.

2. Verfahren nach Anspruch 1,
wobei die Schaufelschwingungen berührungslos gemessen werden.

3. Verfahren nach Anspruch 1 oder 2,
wobei die Berechnung der theoretischen Schaufeleigenfrequenzen mittels Finite-Elemente-Berechnung ermittelt wird.

4. Verfahren nach Anspruch 1, 2 oder 3,
wobei die gemessenen Schaufelfrequenzen über Fourie-Transformation oder ähnliche Spektralanalyse ermittelt werden.

5. Verfahren nach einem der vorhergehenden Ansprüche,
wobei die Berechnung der Schaufeleigenfrequenzen in Abhängigkeit eines Risses und in Abhängigkeit von Drehzahl- und Temperaturabweichungen erfolgt und **dadurch** eine Vielzahl von Datensätzen entsteht.

6. Verfahren nach einem der vorhergehenden Ansprüche,
wobei die gemessenen Schaufeleigenfrequenzen in definierten zeitlichen Abständen beobachtet werden und aus der zeitlichen Entwicklung der gemessenen Schaufelfrequenzen ein Riss ermittelbar ist.
